Europäisches Patentamt

(19) European Patent Office

Office européen des brevets

(11) Publication number: **0 059 804**
**A1**

(12) **EUROPEAN PATENT APPLICATION**

(21) Application number: **81300932.1**

(22) Date of filing: **05.03.81**

(51) Int. Cl.³: **F 16 L 55/00**
**G 01 M 3/40**

(43) Date of publication of application:
**15.09.82 Bulletin 82/37**

(84) Designated Contracting States:
**AT BE CH DE FR GB IT LI LU NL SE**

(71) Applicant: **PANHANDLE EASTERN PIPE LINE
COMPANY
P.O. Box 1348
Kansas City Missouri 64141(US)**

(72) Inventor: **Andrews, Larry A.
Route 2
Tonganoxie Kansas 66086(US)**

(72) Inventor: **Tietze, Thomas N.
9825 Cherry Apt., 12
Kansas City Missouri 64131(US)**

(74) Representative: **Williams, Trevor John et al,
J.A. KEMP & CO. 14 South Square Gray's Inn
London WC1R 5EU(GB)**

(54) **A method of and apparatus for sensing electric current leakages in a cathodically protected pipeline.**

(57) Apparatus for locating an electrical leakage fault path relative to a cathodically protected buried pipe (8) utilises a conductor wire (11) connected at one end to the pipe (8) and at the other end being wound on a reel including a level winding and distance measuring mechanism (135) and connected to electrical signal monitoring means. An electrode (60) in an earth cutting blade (2) is also connected to the monitoring means and is mounted to a drafting structure (4) for moving the blade through the earth generally over the buried pipe at a sufficient depth continuously to encounter and to sense electrical current indicating a flow or break in the cathodic protection of the pipe. The drafting structure includes a hitch (17) for connection to a suitable vehicle and a regulating mechanism (20, 18, 19) for controlling the depth of the blade into the earth. The monitoring components collect, store, process and analyse data derived from the electrode (60) with respect to the conductor wire (11) continuously to determine the extent of cathodic protection of the pipe and location of faults, if any.

EP 0 059 804 A1

./...

Croydon Printing Company Ltd

Fig. 2.

- 1 -

DESCRIPTION

"A METHOD OF AND APPARATUS FOR SENSING ELECTRIC CURRENT LEAKAGES IN A CATHODICALLY PROTECTED PIPELINE".

This invention relates to a method of and apparatus for detecting electrolytic action associated with buried conductive structures and more particularly relates to detecting flaws in the cathodic protection of a buried pipeline.

Steel pipe employed to convey liquid petroleum products, natural gas, water and other fluids is subject to galvanic or electro-chemical corrosion which tends to cause a spot or area on the pipe to go into solution and corrode, leading to leaks and breakages in the pipeline. The industry practice calls for cathodic protection of such pipes in which, by the application of an external source of D-C voltage, the pipe becomes lower in potential than the surrounding soil. The buried pipe is thus made a cathode instead of an anode and so long as the cathodic protection is effective, the pipe is protected from corrosion.

Pipes, when used for transmission of natural gas, are typically buried 0.9 to 2.5 metres below the earth surface and have a coating of a protective insulating substance such as coal tar enamel on bonded epoxy resin and may be suitably wrapped to protect the pipe against corrosion. The coating on the pipe is not a perfect insulator and the protective D-C energy can be measured above the pipeline. Utilising a voltmeter connected between a conductor wire extending from a point on the pipeline and a conductor wire from an electrode in contact with the soil above the pipeline, a determination of the extent of cathodic protection can be made whereby a constant high reading on the voltmeter indicates that the protective energy is properly insulated from the ground by the protective coating on the pipeline.

Conversely, where the electrode encounters an electrical leakage fault path, low voltages are sensed by the voltmeter and indicate places where the D-C energy is effecting the potential of the surrounding soil, such as by a break in the protective coating on the pipeline, so that the meter indicates little potential difference between a high energy point at the connection of the conductor wire connected to the pipeline and the high energy point of the soil effected by the electrical leakage fault path.

Cathodic protection determination surveys have usually been conducted at intervals or spaced points along the length of the buried pipeline by a person walking the line. This method is time-consuming, expensive and subject to inaccuracies, not the least of which are missed faults if the fault is between survey points.

According to the invention there is provided apparatus for drafting by a vehicle for sensing and locating electric current leakage faults in a cathodically protected pipeline buried below an earth surface and comprising: a conductor wire for electrical connection to a buried pipeline; a drafting structure having means for connection to a drafting vehicle; an earth cutting blade connected to said drafting structure and extending generally downwardly therefrom, said cutting blade being adapted for ploughing through and travelling below an earth surface generally adjacent said pipeline and having a bottom portion for positioning by said drafting structure at a sufficient depth continuously to encounter electric current from any electric current leaking faults between the earth and said pipeline as the drafting structure is moved therealong in one of the apparatuses, said drafting structure including arm means for maintaining the blade at a preselected constant depth with respect to the earth; an electrode in said blade bottom portion for sensing said electric current; and means for monitoring said electric current between said conductor wire and said electrode for locating cathodic protection faults.

According to another aspect of this invention there is provided a method of continuously sensing and locating electric current leakage faults in a cathodically protected pipeline buried below an earth surface and comprising the steps of: providing an earth cutting blade having an electrode at a bottom portion thereof and mounted to a support structure to be in each engaging relation; electrically connecting one end of a conductor wire to a buried pipeline; storing said conductor wire on a reel; electrically connecting the other end of the conductor wire to a monitoring means; electrically connecting said electrode to said monitoring means; extending said blade bottom portion and said electrode below the earth surface and causing it to travel along said pipeline generally adjacent thereto at a sufficient depth in the earth continuously to encounter an electric current caused by any electric current leakage faults between the earth and the pipeline; and monitoring said electric current by comparison between current from said conductor wire and said electrode for locating cathodic protection faults.

The invention will become further apparent from the following description taken in connection with the accompanying drawings, wherein:

Figure 1 is a diagrammatic, elevational view illustrating a cathodic survey apparatus embodying the present invention and in use over a buried pipeline.

Figure 2 is an enlarged, elevational view of an earth-cutting blade and drafting structure for moving the blade through the earth.

- 4 -

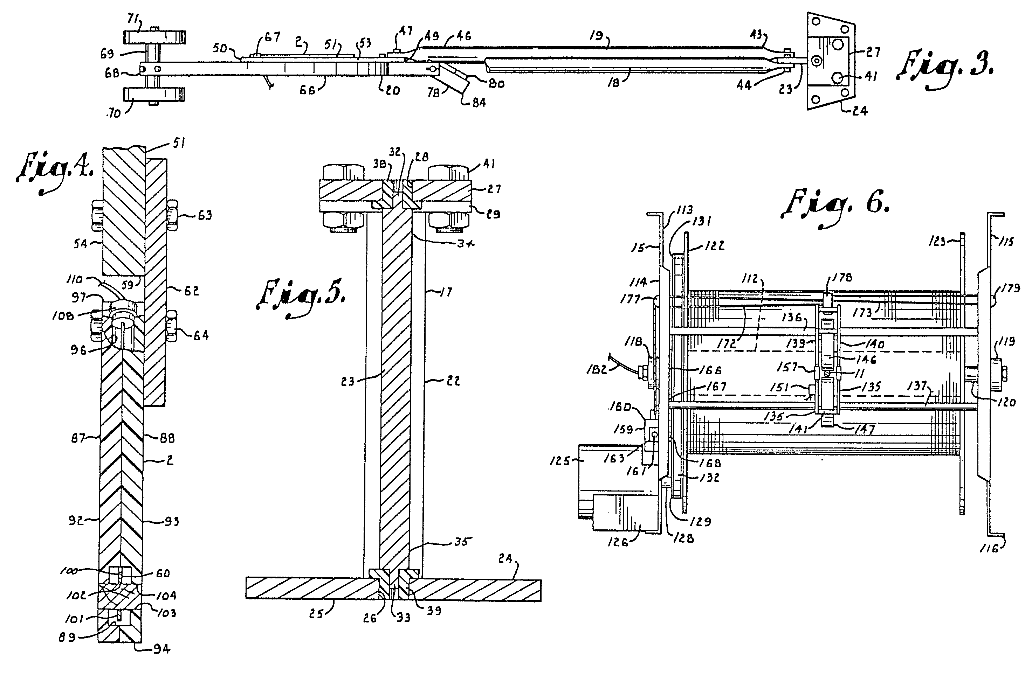

Figure 3 is a fragmentary, top plan view of the earth-cutting blade and drafting structure.

Figure 4 is a vertical sectional view of the earth-cutting blade taken along line 4-4, Figure 2.

Figure 5 is a vertical sectional view of a hitch connection of the drafting structure taken along line 5-5, Figure 2.

Figure 6 is a front elevational view of a reel for containing wire thereon and having level winding and distance measuring means.

Figure 7 is a top plan view of the wire reel and showing the level winding and distance measuring members thereof.

Figure 8 is a fragmentary view of the wire winding reel and showing details thereof.

Figure 9 is an enlarged, fragmentary view of a distance measuring mechanism of the wire winding reel.

Figure 10 is a diagrammatic view of monitoring means for use with the earth-cutting blade and current sensing electrode and showing a plurality of components for collecting, storing, processing and analysing data derived thereby.

Figure 11 is an enlarged, fragmentary sectional view of the electrical current sensing electrode positioned within the earth-cutting blade.

Figure 12 is an enlarged, fragmentary, transverse sectional view of the earth-cutting blade showing the electrical current sensing electrode thereof in contact with the soil as the blade is drawn therethrough.

Referring more in detail to the drawings:

A cathodic apparatus 1 embodying the present invention includes an earth-cutting blade 2 having means for sensing electric energy in the earth 3. The earth-cutting blade 2 is mounted to suitable structure such as a drafting apparatus 4 connected to a vehicle 5 such as a tractor or truck for moving the blade 2 through the earth 3. Monitoring means 6 are included for determining electrical voltages and measurements thereof and collecting, storing, plotting and analysing said measurements.

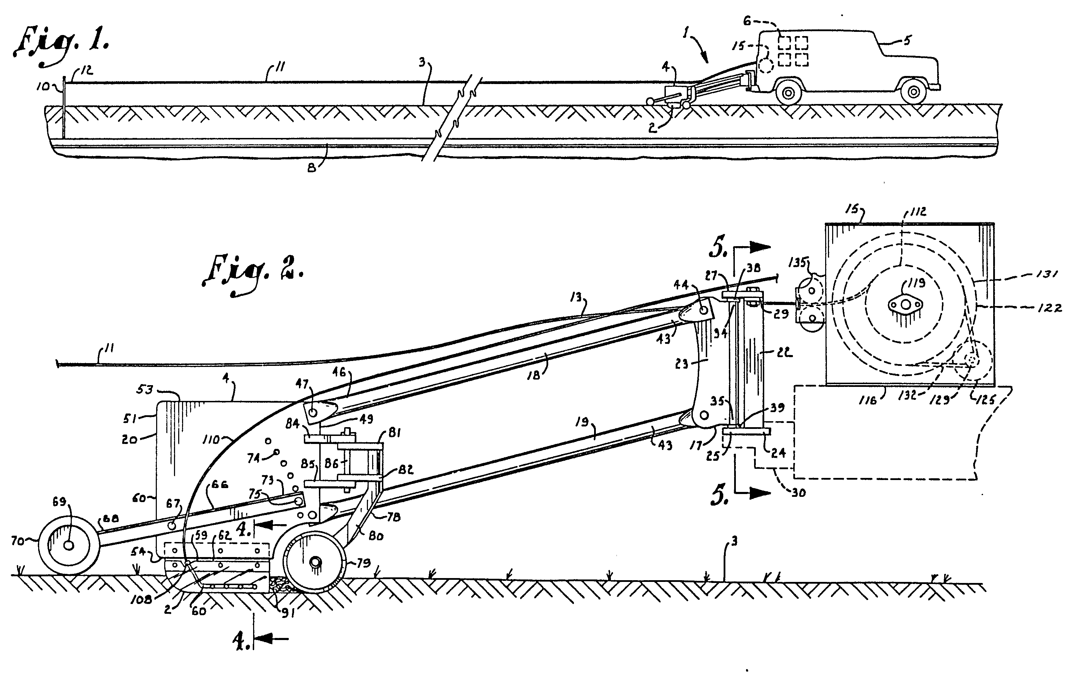

Figure 1 illustrates an example of the use of the survey apparatus to measure, or determine the extent of cathodic protection of a buried conductive structure, shown as a pipeline 8, having a protective covering of coal tar enamel, bonded epoxy resin or the like and which may be suitably wrapped. The pipeline 8 is provided with a source of D-C energy (not shown) and is cathodically protected thereby against detrimental electrolytic action leading to corrosion.

Located at intervals along the pipeline 8 are a plurality of station markers 10 respectively comprising an insulated probe physically contacting the pipeline 8 and extending above ground level. In pipeline practice, station markers 10 are positioned at known intervals and selected locations and visually reveal the presence of the pipeline 8 therebelow.

A conductor wire 11 has a first end 12 connected to the station marker 10 for maintaining direct electrical contact with the cathodically protected pipeline 8. The other end 13 of the wire is wound on a reel 15 and electrically connected to an electrode in the earth-cutting blade 2 via the monitoring means 6 for comparison of electrical signals sensed respectively by the electrode and the conductor wire 11. The wire is preferably properly shielded, such as with plastics insulation, to prevent inadvertent grounding and has an outside diameter, with insulation, in the order of 0.3 cms.

As shown in Figures 1 and 2, the vehicle 5 tows a drafting apparatus 4 comprising a hitch portion 17, elongate upper and lower arms 18 and 19 and a depth regulating mechanism 20 controlling the depth of the earth-cutting blade 2. The hitch portion 17 has vertically extending fixed and pivotal upright members 22 and 23 in spaced, side-by-side relationship, the fixed upright member 22 being mounted to the vehicle 5 and the pivotal upright member 23 being rotatably connected to the fixed upright member 22. In the illustrated example, Figure 5, the fixed upright member 22 has a bottom flange or foot 24 mounted to a connecting portion 30 of the vehicle 5 with a lower ear portion 25 of the bottom flange or foot 24 having a bore 26 therethrough for connecting the pivotal upright member 23. An upper ear 27 has a bore 28 vertically aligned with the lower bore 26 and is connected, as by bolts 41, to a flange 29 mounted normally atop the fixed upright member 22.

The pivotal upright member 23 is, for example, generally planar in shape and has respective upper and lower ends 34 and 35 with upper and lower pins 32 and 33 extending longitudinally therefrom, Figure 5. Insulated bushings 38 and 39 respectively fit over the pins 32 and 33 and provide electrical isolation of the pivotal upright member 23 from the fixed upright member 22 to prevent interference from the engine, radio, alternator, and the like of the vehicle 5.

To connect the pivotal upright member 23 to the fixed upright member 22, the lower pin 33 is inserted into the insulated bushing 39 and fitted into the bore 26 of the lower ear portion 25. The upper pin 32 is inserted into the insulated bushing 38 and fitted into the bore 23 of the upper ear 27. The upper ear 27 is then attached to the fixed upright member 22 by the bolts 41 to bring the pivotal upright member 23 into parallel and rotative engagement with the fixed upright member 22.

The upper and lower arms 18 and 19, Figure 2, form drawbars which respectively have first ends 43 pivotally connected for up and down swinging movement to respective upper and lower ends 34 and 35 of the pivotal upright member 23 by pins 44. Arm second ends 46 are similarly pivotally connected to the blade mounting and depth regulating mechanism 20 by pins 47 to a front portion 49 of the mechanism 20 whereby the arms 18 and 19 form lengths of a parallelogram-shaped structure for providing parallel motion of the earth-cutting blade 2 to the earth 3 at various elevations or depths.

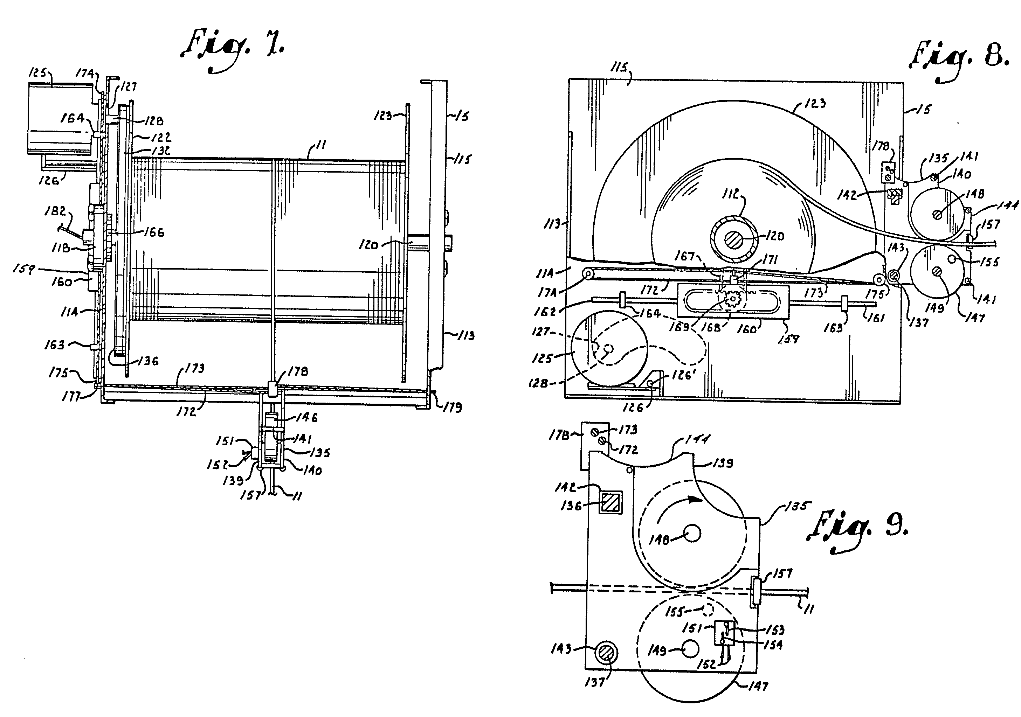

The depth regulating mechanism 20 includes a body member 51 having front and rear portions 49 and 50 and upper and lower portions 53 and 54. The earth-cutting blade 2 is mounted to the body member 51 adjacent the lower portion 54, Figures 2 and 4, by a connecting plate 62 extending parallel to the body member 51 and secured to the lower portion 54 and the blade 2 by upper and lower fasteners such as bolts 63 and 64. A space 59 is retained between the lower portion 54 and the blade 2 for access to an electrode 60 in the blade 2.

To adjust the depth of cut of the blade 2 into the earth 3, an elongate arm 66 is pivotally connected by a pin 67 to the body member 51 adjacent the rear portion 50. A first end 68 of the arm 66 has a shaft or axle 69 extended normally therethrough to which spaced wheels 70 and 71 are rotatably mounted for travel over the earth surface. An arm second end 73 is selectively connectable, as by a pin 75, with one of a series of bores 74 through the body member 51 positioned equidistantly and radially of the pin 67 for up and down swinging movement of the arm 66 and selective positioning thereof at angles to the body member 51 for moving the wheels 70 and 71 up and down and regulating the depth of cut. In the higher positions, the blade 2 is moved out of ground contact for crossing roads, bridges and the like. Preferably, the earth-cutting blade 2 is set to extend approximately 5 to 15 cms below the earth surface for encountering electric currents in the ground between the pipeline and the earth and for adequate sensitivity thereto.

A coulter assembly 78, Figure 2, is mounted forwardly of the earth-cutting blade 2 to cut a channel for the blade 2 and slice through interfering vegetation in a line of travel of the blade 2. The exemplary coulter assembly 78 includes a disc 79 rotatably mounted on an arm 80 fixed for sideward swinging movement to the front portion 49 of the body member 51. Spaced, upper and lower ears 81 and 82 extend from the arm 80 and interengage with spaced, upper and lower ears 84 and 85 extending from the body member 51. A pin 86 extends through the aligned ears 81, 84 and 82, 85 and thereby connects the coulter assembly 78 to the body member 51 for pivotal movement. Preferably, the arm 80 is curved laterally to provide clearance from the lower arm 19 during movement of the coulter assembly 78 about the axis pin 86.

For smoothly parting the earth, the blade 2 is preferably planar in shape and has a relatively narrow leading edge 91, bottom and top edges 94 and 97 and a rear or trailing edge 97. For accommodating the electrode 60 in the illustrated example, the blade 2 is formed of side-by-side sheets 87 and 88 of a non-conductive, relatively long wearing material such as Plexiglas, Lexan or the like substance resistant to abrasion, side loads and other stresses encountered while ploughing through the earth. The electrode 60 can be emplaced within the blade 2 by various methods such as moulding a solid blade with a channel retained therein, providing a separate lip portion or the like and as in the illustrated example, an elongate channel 89 is formed in and between the sheets 87 and 88 and extends within the blade 2 substantially the length of the bottom edge 94 and spaced slightly upwardly therefrom from adjacent the leading edge 91 and upwardly to an opening 96 in the top edge 97.

In the illustrated example, the electrode 60 includes a strip 100 preferably of a highly conductive metal such as copper having a plurality of ring portions 101 with bores 102 therethrough. Plugs 103 preferably composed of a porous and permeable material such as wood or suitable ceramics extend through the bores 102 for purposes described below. Bores 104 extend transversely through the blade 2 and in coaxial alignment with the bores 102 for insertion of the plugs 103 completely through the blade 2 and the strip 100 whereby the plugs 103 physically contact the strip 100 and the earth 3 as the blade 2 passes therethrough and so that the plugs 103 provide ultra-sensitive sensing portions of the electrode 60.

To provide a reference electrode standard in the industry for measuring cathodic protection potentials, a conductive liquid such as an aqueous solution of copper sulphate is poured into the channel 89 through the opening 96 and surrounds the copper strip 100, the channel 89 thereby acting as a reservoir. The plugs 103 become saturated, or wetted, with the copper sulphate solution 106 whereby an electrically conductive path of low resistance is formed from the soil contacting the blade 2 and plugs 103 to the copper strip 100. As the blade 2 moves through the earth 3, the copper sulphate solution 106 gradually seeps continuously from the reservoir through the plugs 103 and must be replenished as necessary through a removable cap 108 selectively closing the end of the opening 96 and making contact with the electrode strip 100. A conductive and shielded wire 110 extends from the cap 108 in electrical contact with the strip 100 to the monitoring means 6 for transmission of electrical signals sensed by the electrode 60.

The reel 15, Figures 6 to 8, includes a drum 112 for winding the conductor wire 11 thereon and having a horizontal axis of rotation. The drum 112 is mounted within a frame structure 113 having opposite vertical side plates 114 and 115 respectively with flanges 116 on lower portions thereof for mounting on the vehicle 5. Spaced coaxial journals 118 and 119 in the side plates 118 and 119 rotatably support a drum axle shaft 120. Opposite ends of the drum 112 are connected to circular flanges 122 and 123 for retaining the conductor wire 11 thereon.

The reel 15 includes means for selectively providing powered rotation of the drum 112 such as an electric motor 125 swingably mounted to the side plate 114 by a hinged bracket 126 having an axle 126' spaced from the electric motor 125 for up and down swinging movement of the motor 125 and whereby the motor 125 tends to swing downwardly and away from the drum 112 under the force of gravity. A drive shaft 128, Figure 7, extends from the motor 125 through a relatively large opening 127 in the side plate 114 for swinging movement with the motor 125. A first pulley 129 is secured to the end of the drive shaft 128 and positioned between the side plate 114 and the drum flange 122. A second pulley 131, such as of larger diameter than the first pulley 129 for a desired drive multiplication, is mounted to the circular flange 122 for revolution therewith. A drive belt 132 connects the first and second pulleys 129 and 131 and is maintained under driving tension by the weight of the motor 125 on the hinged bracket 126 for selectively providing powered rotation of the drum 112, as when it is desired to reel in the conductor wire 11.

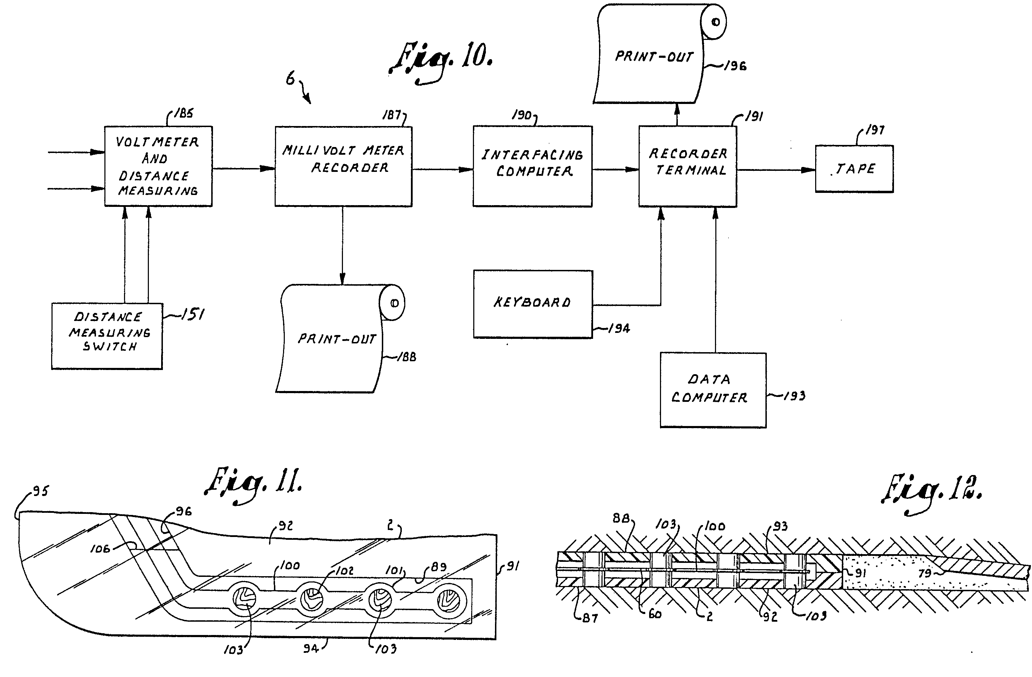

A level winding and distance measuring mechanism 135, Figures 8 and 9, is mounted forwardly of the reel 15 on the horizontal upper and lower bars 136 and 137 extending between the side plates 114 and 115 for longitudinal sliding movement across the drum 112. The mechanism 135 includes a frame of horizontally spaced, vertically extending walls 139 and 140 secured together by transverse connecting rods 141. An upper ball bearing journal 142 and lower sleeve bearing 143 provide connections for slidably attaching the mechanism 135 to the upper and lower bars 136 and 137.

Upper and lower wheels 146 and 147 are mounted between the walls 139 and 140 by respective axle pins 148 and 149 for rotation in a vertical plane with the upper wheel 146 mounted in a separate hinged portion 144 of the walls 139 and 140 for access between the wheels 146 and 147. The upper wheel 146 bears upon the conductor wire 11 and the lower wheel 147 so that the lower wheel 147 rotates in response to reeling and unreeling movement of the conductor wire 11.

The distance measuring means includes a switch 151 with electrical leads 152 for transmitting a signal to the monitoring means 6 when the switch 151 closes and completes a circuit. The switch 151, Figure 9, is mounted over an aperture (not shown) in the wall 139 and includes a movable arm 153 which contacts a stationary arm 154 in response to the attraction of a magnet 155 mounted on the lower wheel 147 to complete a circuit. The known circumference of the lower wheel 147 thereby provides a measurement of the length of wire 11 passing between the wheels 146 and 147.

Roller bearings 157 are respectively mounted on front edges of the walls 139 and 140 and facilitate paying out and winding in of the conductor wire 11 as the level winding and distance measuring mechanism 135 moves across the drum 112.

A level winding drive mechanism 159, includes a gear 160 in the form of an elongate housing preferably of a length commensurate with the length of the drum 112 and having internal teeth. The gear 160 is reciprocally mounted on the side plate 114 for front to rear movement by longitudinally extending guide rods 161 and 162 slidably mounted in front and rear ears 163 and 164 projecting from

0059804

- 12 -

the side plate 114. To cause the gear 160 to move back and forth, a first sprocket 166 is fitted onto the axle shaft 120 and connected, such as by a drive chain 167, to a second sprocket 168. A pinion gear 169 is axially connected to the second sprocket 168 and drives the gear 160 therearound in intermeshing engagement. As the pinion gear 169 rotates, the gear 160 reciprocates back and forth on the side plate 114 and, _via_ an arrangement of cables and pulleys, moves the level winding and distance measuring mechanism 135 from side to side.

The exemplary arrangement, Figure 8, includes a connection block 171 fixed on top of the gear 160 with first ends of cables 172 and 173 attached thereto. The cable 172 travels around a pulley 174 positioned on a rearward portion of the side plate 114 and the cable 173 around a pulley 175 on a forward portion of the side plate 114. The cable 172 leads from the pulley 174 also around the cable 175 and the cables 172 and 173 run upwardly together and around a third pulley 177, Figure 6. From the third pulley 177, the cable 172 is connected to a block 178 on the level winding and distance measuring mechanism 135. The cable 173 extends beyond the mechanism 135, around a pulley 179 mounted on the opposite side plate 115 and back to the block 178. Thus, rotation of the pinion gear 169 causes the gear 160 to reciprocate back and forth and pull the cables 172 and 173 therewith, in turn pulling the level winding and distance measuring mechanism 135 for travel from side to side of the drum 112 and level winding of the conductor wire 11.

The conductor wire 11 is electrically connected to the drum 112 and electrical signals directly from the cathodically protected pipeline 8 _via_ the connector wire 11 are transmitted to the monitoring means 4 by a wire 182 swivellably connected to the drum axle shaft 120 so that the wire 182 is not twisted as the drum 112 revolves.

Signals from the electrode 60 are transmitted to the monitoring means 4 _via_ the wire 110 and signals from the distance measuring switch 151 are transmitted _via_ the electrical wires 152.

The monitoring means 6 may include a variety of electrical measuring instruments and computing devices and in the illustrated example, Figure 10, signals received from the electrode 60 and from the pipeline are entered into a high sensitivity voltmeter 185 having a distance referencing device therewith receiving signals from the distance measuring switch 151. Measurements by the distance measuring mechanism 135 can be compared to known positions of station markers 10 to determine location of the electrode 60 which are in turn referenced against signals received from the electrode 60. From the voltmeter and distance referencing device 185, data are entered into a millivoltmeter recorder 185 having a print-out device 188 therewith providing a printed record of impulses received. From the millivoltmeter recorder 187, data are entered into an interfacing computer 190, which for example, changes the data readings from analogue to digital form and routed to a recorder terminal 191 which, using a data computer 193 in conjunction with entries made on a keyboard 194, such as indications of weather, rivers, fences, dates and other pertinent data which may effect the signal readings, provides both a paper print-out 196 and a magnetic tape record 197.

In the use of the cathodic survey apparatus 1, the hitch portion 17 of the drafting apparatus 4 is connected to a suitable vehicle 5 and positioned generally adjacent a station marker 10 of known location and over the buried pipeline 8. The conductor wire 11 is electrically connected to the pipeline 8, such as by attachment to the station marker 10.

The channel 89 is filled with the aqueous solution of copper sulphate 106 and the earth-cutting blade 2 is positioned so that the bottom edge 94 extends approximately 5 to 15 cms into the earth 3 for encountering a cathodic protection circuit between the pipeline and the earth and sensing electrical current flow. The motor 125 is swung upwardly on the hinged bracket 126 and released from driving relation with so that the drum 112 freely pays out the conductor wire 11 through the level winding and distance measuring mechanism 135 as the vehicle 5 travels away from the station marker 10. Simultaneously, the earth-cutting blade 2 rips through the top layer of soil and plant roots below the ground surface and above the buried pipeline 8, thereby continuously sensing electrical signals relating to cathodic protection of the buried pipeline 8.

The coulter assembly 78 in front of the blade 2 slices through tangled plant roots and hardened earth and permits the blade 2 to slide through the earth therebehind without undue force being exerted on the blade 2.

As the earth-cutting blade 2 and the electrode 60 therein plough along the pipeline 8, the sensed electrical signals are constantly received by the monitoring means 6 whereby an operator inside the vehicle 5 can immediately identify some potential corrosion areas. Further, a record of the survey is made as described above so that the survey can be evaluated and compared with similar or previous surveys to determine long term degradation of cathodic protection tending to permit corrosion.

When approximately 600 to 900 metres of the conductor wire 11 has been unreeled from the drum 112, the conductor wire becomes increasingly subject to breakage and the wire 11 should be reeled in and connected to another station marker. By swinging the motor 125 into driving tension, power is applied to the drum 112 to reel in the conductor wire 11. The wire 11 is connected to the

- 15 -

new station marker and the survey recommenced.

It is to be understood that this invention can be embodied in many and varied forms and one, two or three or more earth-cutting blades 2 and electrodes 60 can be employed to take measurements directly over and even above and to a side of the pipe line 8.

# C L A I M S

1. Apparatus for drafting by a vehicle for sensing and locating electric current leakage faults in a cathodically protected pipeline buried below an earth surface and comprising: a conductor wire (11) for electrical connection to a buried pipeline (8); a drafting structure (4) having means (22) for connection to a drafting vehicle; an earth cutting blade (2) connected to said drafting structure and extending generally downwardly therefrom, said cutting blade (2) being adapted for ploughing through and travelling below an earth surface (3) generally adjacent said pipeline and having a bottom portion (94) for positioning by said drafting structure at a sufficient depth continuously to encounter electric current from any electric current leaking faults between the earth and said pipeline as the drafting structure is moved therealong in one of the apparatus; said drafting structure including arm means (18,19) for maintaining the blade at a preselected constant depth with respect to the earth; an electrode (60) in said blade bottom portion for sensing said electric current; and means (6) for monitoring said electric current between said conductor wire and said electrode for locating cathodic protection faults.

2. Apparatus as claimed in Claim 1, characterised in that said blade (2) has top (97) and bottom (94) portions, a relatively narrow leading edge (91) and opposite sides (87, 88) extending rearwardly therefrom and terminating downwardly at said bottom portion (94); said blade including an interior passage (96,89) extending downwardly from said top portion (97) into said blade and terminating near said bottom portion (94) with said electrode (60) being positioned in said passage.

3. Apparatus as claimed in Claim 2, characterised
in that said electrode (60) includes a conductive metal
member (100) in said blade and at least one plug member
(103) of porous material extending through said blade
to contact said metal member (100) and the earth below
the earth surface, means (96,89) being provided for
permitting the supply of an electrically conductive liquid
to wet said plug member (103) to provide a conductive path
from the exterior of the blade to the metal member.

4. Apparatus as claimed in Claim 3, characterised
in that said passage (89) extends within said blade (2)
along said bottom portion and has an outlet (96) on a top
portion of said blade; a removable and replaceable cap
(108) is provided on the outlet for enabling the passage
to be filled as a reservoir with said conductive liquid; and
a wire extends from said means (6) for monitoring and is
connected to said cap (108) and said metal member (100)
for transmitting said electric current.

5. Apparatus as claimed in Claim 3 or 4,
characterised in that said metal member (100) is a copper
strip and the conductive liquid is an aqueous solution of
copper sulphate.

6. Apparatus as claimed in any preceding claim,
characterised in that the drafting structure has a hitch
portion (17) electrically insulated from the drafting
vehicle and a body member (20) mounted to said blade (2),
the arm means comprising upper and lower draw arms (18,19)
of substantially equal length extending between said hitch
portion (17) and said body member (20) and forming a
parallelogram shaped structure providing parallel motion
of said blade (2) at various elevations and depths.

7. Apparatus as claimed in Claim 6, characterised
in that an elongate arm (68) is pivotally connected to said
body member (20) for vertical swinging movement and has a rear end extending rearwardly of the body member (20);
means (74,75) are provided for selectively fastening
said arm (68) to said body member (20) at a selected one
of a plurality of angles relative thereto, and an earth
contacting wheel (70) is rotatably mounted on the rear
end of the arm (68) for maintaining the blade (2) at
selected elevations and depths.

8. Apparatus as claimed in Claim 6 or 7,
characterised in that a coulter assembly (78) is mounted
to said body member (20) forwardly of said blade (2) and
has a disc (79) for slicing through vegetation and
deflecting articles from the path of travel of the blade
during use of the apparatus.

9. Apparatus as claimed in any preceding
claim, characterised by a reel (15) for winding and
unwinding said conductor wire (11) and having a distance
measuring means (135) for determining an amount of conductor
wire unreeled therefrom, said distance measuring means
comprising a wheel (147) contacting said conductor wire
(11) to be rotatable as said conductor wire is payed out
from the reel, a magnet (155) mounted on the wheel for
rotation therewith, and a magnetically actuated switch
(151) mounted adjacent said wheel to open and close in
response to the magnet (155) passing thereby to signal
each revolution of the wheel.

10. Apparatus as claimed in any preceding claim,
characterised by a level winding means (135) for evenly
spooling the conductor wire (11), said level winding means
including a guide (139, 140) for said conductor wire; a
reel driven gear mechanism (159); and a cable (173) and
pulley (174,175,177,179) arrangement operably connected
to said gear mechanism and said guide for moving said
guide across the reel to lead said conductor wire onto
the reel.

11. A method for continuously sensing and locating electric current leakage faults in a cathodically protected pipeline (8) buried below an earth surface and comprising the steps of: providing an earth cutting blade (2) having an electrode (60) at a bottom portion thereof and mounted to a support structure (17) to be in each engaging relation; electrically connecting one end of a conductor wire (11) to a buried pipeline (8); storing said conductor wire (8) on a reel (15); electrically connecting the other end of the conductor wire (11) to a monitoring means (6); electrically connecting said electrode (60) to said monitoring means (6); extending said blade bottom portion and said electrode (60) below the earth surface and causing it to travel along said pipeline (8) generally adjacent thereto at a sufficient depth in the earth continuously to encounter an electric current caused by any electric current leakage faults between the earth and the pipeline; and monitoring said electric current by comparison between current from said conductor wire and said electrode for locating cathodic protection faults.

12. A method as claimed in claim 11, characterised in that said conductor wire (11) is unwound from the reel (15) as said blade (2) and the electrode (60) are moved along the pipeline (8) and subsequently evenly rewinding said conductor wire on said reel, the length of conductor wire wound and unwound on the reel being measured for determining the distance from a point of connection of the first end of said conductor wire.

13. A method as claimed in claim 11 or 12, characterised in that signal strength and current direction data is derived from the monitoring means (6) and said data is then analysed, stored and plotted to evaluate the extent of cathodic protection of the pipeline and the location and relative intensity of any cathodic protection faults therealong.

14. A method as claimed in claim 11, 12 or 13, characterised in that said blade (2) is extended below the earth surface to a depth such that said electrode (60) is positioned about 10 to 15 cms below the earth surface.

0059804

Fig.1.

Fig.2.

Fig.3.

Fig.6.

Fig.5.

Fig.4.

Fig. 7.

Fig. 8.

Fig. 9.

3/4

0059804

Fig. 10.

VOLTMETER AND DISTANCE MEASURING ~185

DISTANCE MEASURING SWITCH ~151

MILLIVOLT METER RECORDER ~187

PRINT-OUT ~188

INTERFACING COMPUTER ~190

RECORDER TERMINAL ~191

PRINT-OUT ~196

TAPE ~197

KEYBOARD ~194

DATA COMPUTER ~193

Fig. 11.

Fig. 12.

4/4

0059804

## DOCUMENTS CONSIDERED TO BE RELEVANT

| Category | Citation of document with indication, where appropriate, of relevant passages | Relevant to claim |
|---|---|---|
| | US - A - 3 106 089 (SCOTT)<br><br>* Column 4, lines 41-75; column 5, lines 1-35; column 7, lines 7-52 * | 1,2, 11,13 |
| | -- | |
| A | US - A - 3 792 350 (BOSSLER)<br><br>* Fig. 2; column 4, lines 7-36 * | 1 |
| | -- | |
| A | US - A - 4 039 938 (LINK)<br><br>* Fig. 1; column 5, lines 18-40 * | 1 |
| | ---- | |

**CLASSIFICATION OF THE APPLICATION (Int. Cl.)**

F 16 L 55/00
G 01 M 3/40

**TECHNICAL FIELDS SEARCHED (Int. Cl.)**

C 23 F 13/00
F 17 D 5/00
F 16 L 55/00
F 16 L 58/00
G 01 R 31/00
G 01 M 3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family

corresponding document

| X | The present search report has been drawn up for all claims |
|---|---|

| Place of search | Date of completion of the search | Examiner |
|---|---|---|
| VIENNA | 29-10-1981 | GERSTBACH |

EPO Form 1503.1   06.78